(19) Europäisches Patentamt
European Patent Office
Office européen des brevets

(11) **EP 1 998 305 A2**

(12) **EUROPÄISCHE PATENTANMELDUNG**

(43) Veröffentlichungstag:
**03.12.2008 Patentblatt 2008/49**

(51) Int Cl.:
***G09B 23/28*** (2006.01)

(21) Anmeldenummer: **08008339.7**

(22) Anmeldetag: **02.05.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **06.05.2007   DE 102007021348**

(71) Anmelder: **Universitätsklinikum Hamburg-Eppendorf**
**20246 Hamburg (DE)**

(72) Erfinder:
• **Höhne, Karl Heinz**
**25421 Pinneberg (DE)**

• **Petersik, Andreas**
**22395 Hamburg (DE)**
• **Pflesser, Bernhard**
**22147 Hamburg (DE)**
• **Pommert, Andreas**
**21614 Buxtehude (DE)**
• **Tiede, Ulf**
**21465 Wentorf (DE)**

(74) Vertreter: **Schupfner, Georg**
**Müller Schupfner & Partner**
**Patentanwälte**
**Parkstrasse 1**
**21244 Buchholz (DE)**

(54) **Verfahren zur Simulation der Haptik einer Interaktion eines geführten Gegenstandes mit einem virtuellen dreidimensionalen Objekt**

(57)   Gegenstand der vorliegende Erfindung ist ein Verfahren zur Simulation der Haptik einer Interaktion eines von einem Benutzer geführten Gegenstandes, nachfolgend Werkzeug genannt, mit einem virtuellen dreidimensionalen Objekt, insbesondere das Abtasten der Oberfläche des simulierten Objektes und/oder das Eindringen des geführten Gegenstandes in das simulierte Objekt, ggf. unter Materialabtrag.

Fig. 6

**Beschreibung**

Die vorliegende Erfindung betrifft ein Verfahren zur Simulation der Haptik einer Interaktion eines von einem Benutzer geführten Gegenstandes, nachfolgend Werkzeug genannt, mit einem virtuellen dreidimensionalen Objekt, insbesondere das Abtastens der Oberfläche des simulierten Objektes und/oder das Eindringen des geführten Gegenstandes in das simulierte Objekt, ggf. unter Materialabtrag.

Ein Anwendungsbeispiel ist die Simulation von Bohr- und Fräsvorgängen in der Chirurgie, wonach ein Benutzer mit einem virtuellen Werkzeug, geführt durch ein Eingabegerät mit Kraftrückkopplung, mit einem computergraphischen Volumenmodell interagiert. Dem Betrachter erscheint die virtuelle Operation dabei als eine Echtzeit-Bildfolge (z.B. mit ca. 25 Bilder/sec) auf dem Bildschirm. Um diese Interaktionen möglichst realistisch zu gestalten, ist neben der Visualisierung auch die Haptik, also das Fühlbarmachen von Strukturen, in Echtzeit notwendig (haptisches Rendering). Hierfür existiert entsprechende Computerperipherie, sog. Kraftrückkopplungsgeräte, welche die Handbewegungen eines Benutzers an den Computer übermitteln und Kräfte, die z.B. durch die Kollision des Werkzeugs mit einem virtuellen Objekt entstehen, an den Benutzer übermitteln.

Bei der Simulation obiger Vorgänge ergibt sich folgende Problematik:

- Objektdurchdringungen des vom Benutzer geführten Werkzeuges, die in der virtuellen Welt auftreten können, müssen erkannt und entsprechende Positionen des Werkzeuges, die in der Realität erreicht worden wären, müssen berechnet werden. Das Kraftrückkopplungsgerät muss dann an diese Position gedrückt werden, indem eine entsprechende Rückstellkraft auf das Kraftrückkopplungsgerät, das das Werkzeug führt, ausgeübt wird.
- Die beim Abtragen von Material entstehenden Kräfte müssen berechnet und an den Benutzer übermittelt werden.

Kommerziell verfügbare Kraftrückkopplungsgeräte sind hinsichtlich ihrer Fähigkeiten begrenzt, weil ein menschlicher Benutzer die von den Geräten erzeugte Kraft leicht überwinden kann, was im Bezug auf die Objektdurchdringungen zu unrealistisch großen Durchdringungen und somit zum "Durchrutschen" durch virtuelle Objekte führt und bei der Simulation eines Materialabtrags einen zu schnellen und damit nicht den realen Gegebenheiten entsprechenden Materialabtrag bedeutet.

Um das Durchdringen virtueller Objekte beim haptischen Rendering zu verhindern, wurden verschiedene Verfahren entwickelt, die ein zusätzliches virtuelles Objekt (Proxy) einführen, welches andere Objekte nicht durchdringen kann (Zilles, C.; Salisbury, J. K.; "A constraint-based god object method for haptics display"; in: Proc. of IEEE/RSJ 1995).

Nach McNeely et al. (McNeely W. A., Puterbaugh K. D., Troy J. J.; "Six degree-offreedom haptic rendering using voxel sampling" in Proc. of ACM SIGGRAPH, pages 401-408, 1999) wird das Werkzeug durch Punkte und Vektoren repräsentiert. Für die Kollisionserkennung im Volumenmodell werden die Punkte auf Kollision geprüft und die Entfernung entlang der Vektoren zum Mittelpunkt des nächsten Voxels in eine durch die Werkzeugrepräsentation gegebene Richtung bestimmt. Von allen bestimmten Entfernungsvektoren wird dann der Mittelwert gebildet, um so eine Kraft für das Kraftrückkopplungsgerät zu bestimmen. Dieses Verfahren arbeitet nur für sehr geringe Durchdringungen des Objektes durch das Werkzeug gut, weil bei stärkeren Durchdringungen die bestimmten Entfernungen zu klein sind. Zusätzlich müssen die berechneten Kräfte stark geglättet werden, da es aufgrund der als Ganzes betrachteten Voxel und der diskreten Anzahl von Kontaktpunkten bei der Mittelwertbildung der Entfernungsvektoren zu erheblichen Kraftunstetigkeiten kommt. Auch ist eine Volumenmodifikation des Objektes, etwa ein Materialabtrag, mit diesem Verfahren nicht beschrieben.

Aufbauend auf der Werkzeugrepräsentation von McNeely wurde von Petersik et al. (Petersik, A.; Pflesser, B.; Tiede, U.; Höhne, K. H.; Leuwer, R. (2002); "Haptic volume interaction with anatomic models at subvoxel resolution" in: 10th Int. Symposium on Haptic Interfaces for Virtual Environment and Teleoperator Systems, Proc. Haptics 2002. Orlando, FL, 66-72) ein Verfahren vorgestellt, welches für jeden Vektor des Werkzeuges den genauen Ort der Objektoberfläche über eine Bisektion entlang des Vektors sucht. Damit kann das Verfahren auch für größere Durchdringungen von Werkzeug und Objekt eine durchdringungsfreie Position berechnen. Um nun die Durchdringungstiefe von Werkzeug und Objekt möglichst genau zu approximieren, wird von den gefundenen Vektoren nicht, wie bei McNeely et al., der Mittelwert gebildet, da dieser stark abhängig von der Anzahl der kollidierenden Punkte P ist; vielmehr wurde die so genannte Projektionsmethode eingeführt, die jeden einzelnen gefundenen Entfernungsvektor auf den Summenvektor aller gefundenen Entfernungsvektoren projiziert. Die längste Projektion ergibt eine sehr genaue Approximation der Durchdringungstiefe von Werkzeug und Objekt.

Aus der so bestimmten Durchdringungstiefe wird nicht direkt eine Kraft für das Kraftrückkopplungsgerät bestimmt. Vielmehr wird nun auch hier im Volumenmodell erstmals ein Proxy eingesetzt, wobei sich die Position des Proxys aus der berechneten durchdringungsfreien Position an der Objektoberfläche ergibt. Falls die Durchdringung von Werkzeug und Objekt so stark ist, dass für einen oder mehrere Vektoren des Werkzeuges keine Oberfläche mehr gefunden werden kann, wird die Strecke zwischen aktueller Position von Werkzeug und Proxy halbiert und dort ein neuer Berechnungsversuch unternommen. Dies kann beliebig oft bis zu einer festgelegten Iterationstiefe wiederholt werden, bis schließlich eine neue Position an der Oberfläche berechnet werden kann, an die dann der Proxy gesetzt wird. Falls auch an der letzten Iterationsposition keine neue Berechnung möglich ist, verbleibt der Proxy an seiner alten Position.

Das Verfahren von Petersik et al. erlaubt die genaue Berechnung von Durchdringungstiefe und - richtung von einem ausgedehnten Werkzeug und Objekten im Volumenmodell, welches zu einem realistischen haptischen Oberflächenrendering führt, weiterhin ist hier auch eine Methode implementiert, die die Kräfte, die beim Materialabtrag entstehen, simulieren kann.

Der oben beschriebene Stand der Technik liefert interessante Ansätze, es verbleiben aber ungelöste Probleme, die dem Benutzer das haptische Rendering in bestimmten Situationen unrealistisch erscheinen lassen. Dies sind insbesondere:

- Durch dünne Objekte kann durch größeren Kraftaufwand "hindurchgedrückt" werden, weil bei dünnen Objekten und stärkerem Druck die Punkte schnell in den Freiraum hinter das betroffene Objekt gelangen und somit nicht mehr zu Berechnung der Oberflächenposition beitragen oder sogar eine Kraft in die falsche Richtung bewirken können.
- Die iterative Suche nach der Berechnungsposition für den neuen Proxy zwischen altem Proxy und TCP ist sehr rechenzeitaufwändig.
- Der Materialabtrag geht zu schnell vonstatten, wenn die Kraft des Kraftrückkopplungsgerätes nicht ausreicht, um den Benutzer am Eindringen in das Material zu hindern.

Um die sich dem Fachmann aus oben geschildertem Stand der Technik ergebende Aufgabe zu lösen, wird durch die Erfindung ein Verfahren wie durch Anspruch 1 und 10 definiert bereitgestellt. Bevorzugte Ausführungsformen sind Gegenstand der jeweiligen Unteransprüche oder nachfolgend beschrieben.

Die zu bearbeitenden oder abzutastenden Objekte sind hinsichtlich der zu bearbeitenden Bereiche dreidimensional nicht nur hinsichtlich ihrer Oberfläche, sondern auch hinsichtlich des mit dem Werkzeug zu durchdringenden inneren Raums definiert. Dies kann mittels eines Volumenmodells umfassend eine Vielzahl von Voxeln (Volumenelemente) erfolgen oder durch mathematische Funktionen, etwa durch implizite Funktionen. Das erfindungsgemäße Verfahren kann somit auf durch mathematische Funktionen, wie implizite Funktionen, definierte Objekte oder auf durch eine Vielzahl von Voxeln definierte Objekte angewandt werden. Dreidimensionale medizinische Daten liegen meist in der Form von Voxeln vor. Die vorliegende Erfindung betrifft deshalb insbesondere derartige aus einer Vielzahl von Voxeln zusammengesetzte Volumendaten. Das dreidimensionale Objekt stellt bevorzugt körpereigene Strukturen dar.

Bei einem Volumenmodell basierend auf Voxeln lässt sich an beliebigen Positionen innerhalb des Volumens durch direkten Zugriff auf das dreidimensionale Voxelraster anhand von mit den Voxeln verbundenen Objektmarken feststellen, ob dort ein Objekt oder Freiraum vorhanden ist.

Das Werkzeug ist vorzugsweise eine Repräsentation eines Werkzeuges wie es bei chirurgischen Eingriffen benutzt wird.

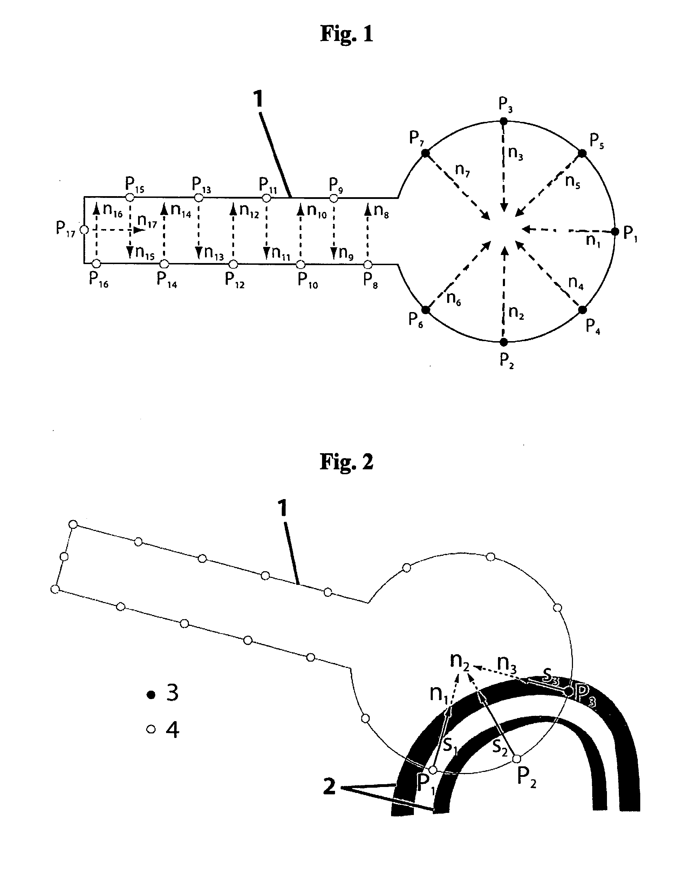

Das Werkzeug ist bevorzugt durch in der Computergraphik übliche polygonale Daten dargstellt. Für das haptische Rendering wird das Werkzeug durch eine Vielzahl von Punkten auf dessen Oberfläche definiert (vergleiche Fig. 1). In der Regel ist es aber lediglich erforderlich, den aktiven Bereich des Werkzeugs entsprechend mit Punkten zu versehen. Der aktive Bereich ist der Bereich des Werkzeuges, der mit dem Objekt während des erfindungsgemäßen Verfahrens in Kontakt treten kann/soll. In Bezug auf das reale Werkzeug handelt es sich z.B. um den Bohrkopf, nicht aber um den Schaft.

Jedem Punkt $P_i$ auf der Oberfläche des Werkzeugs ist ein Vektor $n_i$ zugeordnet, der Vektor $n_i$ verläuft auf der Flächennormalen durch $P_i$ und in Richtung auf das Werkzeuginnere. Die Länge der Vektoren $n_i$ wird bei Erstellung des Werkzeuges festgelegt. Die Größe des Vektors ist hinsichtlich seiner Dimension eine Länge. Richtung und Länge sind so gewählt, dass der Endpunkt des Vektors stets innerhalb des Werkzeuges angeordnet ist. Bei einem kugelförmigen Werkzeug beträgt die Länge vorzugsweise maximal den halben Kugeldurchmesser. Jedes Werkzeug weist mindestens 4 Punkte $P_{i(1-4)}$ und Vektoren $n_{i(1-4)}$ auf, typischerweise sind dies jedoch zumindest 30 oder sogar 40 bis 1000 Punkte und Vektoren.

Für die Bestimmung einer Durchdringung des Objektes durch ein Werkzeug wird folgendes Verfahren verwendet: Beim Start des Verfahrens wird neben dem Werkzeug eine Abbildung des Werkzeuges geschaffen, im Folgenden Proxy genant. Der Proxy ist ein virtuelles Objekt und die identische Duplizierung des Werkzeuges bzw. des aktiven Bereichs des Werkzeugs. Der Proxy selbst kann das bzw. andere Objekte nicht durchdringen. Das Durchdringen des Objekts wird neben dem TCP nur für eine Intermediärposition des Proxys (Proxy $_{Intermediär}$) zugelassen, die lediglich dazu dient, die tatsächliche Proxy-Position zu berechnen.

Die Position des Werkzeuges wird durch den TCP (Tool Center Point) definiert, wobei das Werkzeug unter Zuhilfenahme der entsprechenden Funktionen zur Berechnung des Werkzeuges über den TCP auch in seiner dreidimensionalen Ausdehnung definiert ist. Der Proxy ist entsprechend durch den PCP (Proxy Center Point) bestimmt. Beim Start des Verfahrens ist das Werkzeug ohne unmittelbaren Objektkontakt und es ist zweckmäßig, Proxy- und Werkzeug-Position zusammenfallen zu lassen.

In jedem Zeitschritt wird nun die Proxy-Position, wie durch den PCP bestimmt, neu festgeschrieben, wobei sich die neue Position des PCP $T_0$ aus der Position des PCP zum Zeitpunkt $T_{-1}$ und des Werkzeugs zum

Zeitpunkt $T_0$ wie folgt ergibt. Die Position des Proxy zum Zeitpunkt $T_{-1}$ wird maximal um die Länge $n_i$ auf der Verbindungslinie PCP $T_{-1}$ zu TCP $T_0$ verschoben, so dass sich eine neue Position PCP $T_{0\ intermediär}$ ergibt. Die Position PCP $T_{0\ intermediär}$ wird weiter wie folgt modifiziert, wobei vorab folgende Fallunterscheidung durchgeführt wird: Wenn mindestens ein Endpunkt eines Vektors $n_i$ innerhalb des Objektes liegt, wird auf die Proxy-Position $T_{-1}$ zurückgegriffen und die Position PCP $T_0$ wird als PCP $T_{-1}$ definiert. Im anderen Fall wird die Position PCP $T_0$ des Proxys neu berechnet.

Im Unterschied zu aus der Literatur bekannten Verfahren, wie z.B. Petersik et al., wird zur Neuberechnung der Position PCP $T_0$ jeder der Vektoren $n_i$ des Proxys $T_0$ Intermediär zum Zeitpunkt $T_0$ vom Vektorendpunkt ausgehend abgesucht, vorzugsweise vom Endpunkt des Vektors ausgehend schrittweise in Richtung auf den Punkt $P_i$, bis jeweils ein Punkt bzw. erster Punkt als Schnittpunkt mit der Oberfläche, bzw. in Bezug auf die Vorzugsvariante mit der in Bezug auf das Werkzeug obersten/ersten Oberfläche, des einzutauchenden Objektes gefunden ist. Damit ergibt sich für alle Punkte $P_i$ ein Eindringtiefenvektor $s_i$, der den Abstand des Punktes $P_i$ zur Objektoberfläche (Fig. 2) entlang des Vektors $n_i$ beschreibt und die Richtung des Vektors $n_i$ aufweist.

Wird keine Oberfläche gefunden und der Punkt $P_i$ ist beim Absuchen des Vektors $n_i$ erreicht, resultiert ein Nullvektor für den Eindringtiefenvektor $s_i$, so dass der entsprechende Eindringtiefenvektor $s_i$ nicht in die Berechnung einfließt.

Aus den Eindringtiefenvektoren $s_i$ wird ein Rückstellvektor s berechnet. Der Rückstellvektor s kann durch das Projektionsverfahren, die Vektoraddition der Eindringtiefenvektoren $s_i$ oder das Mittelwert-Verfahren (Vektoraddition und Mitteln der Länge des Vektors gemäß Mittelwert aus den Einzelvektoren) ermittelt werden. Die Durchführung des Projektionsverfahrens ist bevorzugt.

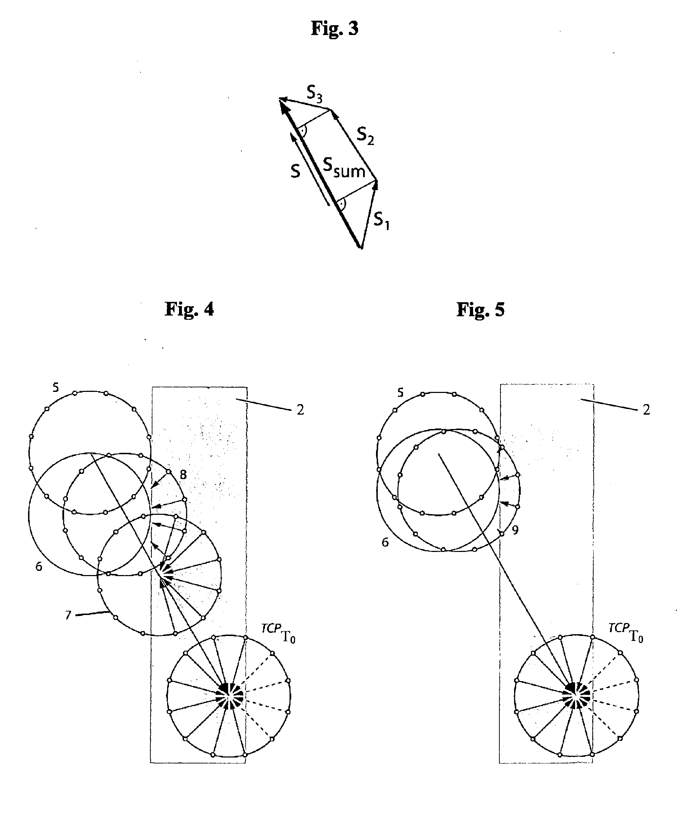

Nach dem Projektionsverfahren wird der resultierende Vektor (gleich Rückstellvektor s) aus den Eindringtiefenvektoren $s_i$ (siehe Abb. 3) durch Ermittlung des Summenvektors $S_{sum}$ aus der Vektoraddition ermittelt, wobei die Länge des Rückstellvektors s sich aus der jeweils längsten Projektion aller Eindringtiefenvektoren $s_i$ auf den Summenvektor $S_{sum}$ ergibt. Zu den Einzelheiten der Durchführung des Verfahrens wird auf Petersik et al. verwiesen, dass durch Referenzierung diesbezüglich zum Bestandteil der Offenbarung der vorliegenden Erfindung gemacht wird.

PCP $T_{0\ intermediär}$ wird nun um den Rückstellvektor s verschoben und ergibt den PCP $T_0$. Damit ist die Fallunterscheidung abgeschlossen.

Der TCP wird jetzt in Richtung der Proxy-Position PCP $T_0$ gedrückt. Dazu wird eine Gegenkraft, wiedergegeben durch den Vektor von TCP $T_0$ nach PCP $T_0$, ausgeübt, wobei in der einfachsten Näherung ein Faktor die Rückstellkraft definiert, der proportional zur Länge dieses Vektors ist.

Nach einer besonderen Ausgestaltung der Erfindung wird die Rückstellkraft durch eine Auswertung der Objektmarken des virtuellen Objektes, die mit den Punkten $P_i$ des Proxys $T_{0\ intermediär}$ in Kontakt stehen, bestimmt, um weiche und harte Objekte zu differenzieren. In erster Näherung kann dies durch Mittelwertbildung, ggf. auch gewichtet, aus den den unterschiedlichen Objektmarken zugewiesenen Rückstellkraftfaktoren erfolgen. Die Objektmarken, z.B. der Voxel, sind hierfür mit einer Information für die Rückstellkraft bzw. den jeweiligen Rückstellkraftfaktor versehen.

Wenn der Rückstellvektor s, umfassend die Durchdringungstiefe und -richtung, berechnet ist, ist die Position bekannt, die das Werkzeug in der Realität im Hinblick auf das Eindringen in den Körper erreicht hätte. Die Position ist die Position des Proxy $T_0$.

Gegenüber dem in Petersik et al. vorgestellten Proxy-Verfahren verbietet dieses Verfahren neue Berechnungspositionen für den Proxy, die soweit vom alten Proxy entfernt sind, dass einzelne Vektoren $n_i$ komplett im Freiraum hinter einem Objekt liegen, so dass insbesondere bei dünnen Oberflächen ein Durchdrücken des Objektes unmöglich wird. Außerdem wird die Berechnung stark beschleunigt, da die Proxy-Position für jeden Zeitschritt durch die Verschiebung um $n_i$ nur einmal berechnet werden muss.

*Haptische Simulation von Materialabtrag*

Für schwache Kraftrückkopplungsgeräte ist es häufig notwendig einen unrealistisch schnellen Materialabtrag, der nicht den tatsächlichen Verhältnissen entspricht, zu verhindern, der dadurch zustande kommt, dass die Kraftrückkopplung des Eingabegerätes bei zur großer Krafteinwirkung keinen genügend hohen Widerstand bietet.

Hierfür wird neben dem obigen haptischem Proxy ein weiterer Proxy definiert, der für die Zwecke dieser Erfindung als Materialabtragsproxy definiert ist, und dessen Position durch den MCP (Materialabtragsproxy Center Point) lokalisiert wird. Der MCP wird als Linearkombination aus den jeweils zu einem bestimmten Zeitpunkt aktuellem PCP und TCP berechnet, wobei wegen des Rechenaufwandes hierfür in der Regel ein Zeitraster gewählt wird, dass langsamer als das Zeitraster der Neubestimmung des PCP ist, z.B. um einen Faktor von 20 bis 100 insbesondere 30 bis 70 langsamer.

Die Linearkombination beinhaltet ein lineare Gewichtung der Positionen PCP (haptisch) und TCP (MCP = a x TCP + (1-a) x PCP mit a von 0 bis 1). a ist ein Maß für die Materialabtragsgeschwindigkeit und ist typischerweise relativ klein (z.B. kleiner 0,1). Letztlich wird die Härte des mit dem Werkzeug in Kontakt stehenden Materials durch a bestimmt und damit die Materialabtragsgeschwindigkeit.

Der Haptik-Prozess und der Materialabtragsprozess verlaufen gleichzeitig, wobei der Materialabtragsprozess die Oberfläche des Objekts vorgibt und der Haptikprozess auf die veränderte Oberfläche reagiert und der PCP, insbesondere der PCP $T_0$, entsprechend positioniert wird. Der MCP und die Ausdehnung des Materialabtragsproxys bewirken, im Falle eines durch Voxel definierten Objekts, dass die den einzelnen Voxeln zugeordneten Marken, die mit dem Materialabtragsproxy in Kontakt stehen bzw. von diesem ausgefüllt sind, zur Kennzeichnung des Voxels von "nicht abgetragen" auf "abgetragen" geändert werden, so dass im Ergebnis die Veränderung an der Form des zu bearbeitenden Objektes festgeschrieben wird und der Proxy eine neue Oberflächeneintauchposition innerhalb des möglichen Verschiebungsbereichs $n_i$ für PCP $T_{0\ intermediär}$ findet.

Um eine stabile Wahrnehmung der Haptik zu gewährleisten sind Frequenzen von über 800, insbesondere um oder über 1000 Hz zu gewährleisten. Der Materialabtragsproxy muss aber nicht mit dieser Geschwindigkeit neu berechnet werden. Hierfür genügen Zeitintervalle, die sich hinsichtlich ihrer Frequenz an der visuellen Wahrnehmung orientieren, d.h. Frequenzen von größer 20 Hz vorzugsweise 25 bis 100 Hz.

Das Konzept der Erfindung ist weiter durch die Figuren beschrieben, ohne auf diese eingeschränkt zu sein. Es zeigen:

Fig. 1 Die Repräsentation des Werkzeuges,

Fig. 2 die Berechnung der Durchdringungsrichtung,

Fig. 3 die Anwendung des Projektionsverfahrens,

Fig. 4 das Proxy-Verfahren nach Petersik et al (Stand der Technik, Vergleichsbeispiel),

Fig. 5 das erfindungsgemäße Proxy-Verfahren und

Fig. 6 die Volumenmodifikation mit Proxy.

Das Werkzeug (1) wie in Fig. 1 dargestellt, ist an der Oberfläche durch eine Vielzahl von Punkten $P_1$ bis $P_{17}$ definiert. Von jedem der Punkte $P_1$ bis $P_{17}$ geht ein Vektor $n_1$ bis $n_{17}$ aus, der senkrecht (Flächennormale) auf der Oberfläche steht und nach innen gerichtet ist. Die Anzahl der Punkte, deren Lage und die Länge der Vektoren wurde bei Werkzeugerstellung geschaffen. Im Ergebnis sind diese zweckmäßig über das Werkzeug verteilt. Eine relative Häufung an Punkten kann für den aktiven Bereich auftreten (nicht dargestellt). Wie dargestellt liegen alle Vektorendpunkte innerhalb des Werkzeuges. Im vorliegenden Fall hat das Werkzeug die Form eines Kugelfräsers, wie er in der HNO-Chirurgie als Knochenfräse für den Zugang zum Mittelohr eingesetzt wird.

In Fig. 2 ist die Interaktion des Werkzeuges (1) mit einem dünnen zweischichtigen Objekt (2), das einen Hohlraum aufweist, gezeigt. Der Einfachheit halber sind statt der Punkte $P_1$ bis $P_{17}$ und Vektoren $n_1$ bis $n_{17}$ aus Anschauungsgründen nur die Punkte $P_1$ bis $P_3$ und Vektoren $n_1$ bis $n_3$ wiedergegeben, die neu nummeriert sind

und den Punkten $P_2$, $P_4$ und $P_1$ aus Fig. 1 entsprechen. Gleiches gilt für die Vektoren $n_i$.

Die weiteren Punkte und Vektoren sind der Einfachheit halber nicht dargestellt. Als Vollpunkt (3) für $P_3$ ist die Situation der Durchdringung des Objektes (2) mit dem Werkzeug (1) und die Oberflächenkollision des Punktes $P_3$ wiedergegeben. Die Punkte $P_1$ und $P_2$ sind als Hohlpunkte (4) dargestellt, weil Sie keine Objektkollision aufweisen. Diese Punkte fließen nach den aus dem Stand der Technik bekannten Verfahren nicht in die Berechnung der Proxy-Positionen, wie durch den PCP beschrieben, ein, was nach den Erkenntnissen der vorliegenden Erfindung zu einem unrealistischen haptischen Rendering bei dünnen oder hohlen Objekten führt.

Vom Vektorendpunkt ausgehend wird in einer definierten Schrittweite der Vektor $n_i$ abgesucht, bis eine Kollision mit der Oberfläche eines Objektes festgestellt wird oder der Endpunkt $P_i$ erreicht ist. Vorliegend sind nach diesem Verfahren Teilvektoren, als Eindringtiefenvektor $s_1$ bis $s_3$ bezeichnet, bestimmt, die ihren Ursprung in den jeweiligen Punkten $P_i$ haben und sich bis zu dem jeweiligen Oberflächenkollisionspunkt entlang der Vektoren $n_i$ erstrecken.

Nun wird aus den Eindringtiefenvektoren $s_1$ bis $s_3$ wie in Fig. 3 dargestellt der Summenvektor $S_{sum}$ durch Vektoraddition gebildet. Auf den Summenvektor $S_{sum}$ werden alle Eindringtiefenvektoren $s_i$ projiziert und die längste Projektion ergibt den Rückstellvektor $s$. Im vorliegenden Fall ist diese die Projektion des Vektors $s_2$.

In Fig. 5 ist eine typische Situation dargestellt, in der das Werkzeug weit in das Objekt (2) eingedrungen ist und der Proxy $T_0$ (6) neu berechnet wird. Der Proxy $T_{-1}$ (5), der Proxy $T_{0\ intermediär}$ (9) und der Proxy $T_0$ (6) haben jeweils nicht dargestellten PCPs.

Ausgehend von einer Startposition (TCP $T_{-1}$), zu der der TCP mit dem PCP $T_{-1}$ (5) übereinstimmt (gerade keine Oberflächenberührung), dringt das Werkzeug innerhalb des betrachteten Zeitschrittes in das Objekt ein und nimmt die Position TCP $T_0$ an. Für eine solche Situation ist es notwendig, den PCP neu zu berechnen, so dass der Proxy nicht in das Objekt eindringt. Hierfür wird ein Proxy $_{intermediär}$ (9) geschaffen. Der Proxy $T_{0\ intermediär}$ resultiert aus dem Proxy $T_{-1}$ durch Verschiebung des PCP $T_{-1}$ (5) in Richtung TCP $T_0$ um maximal die Länge $n_i$, jedoch nicht weiter als TCP $T_0$. Hierdurch wird der PCP $T_{0\ intermediär}$ (9) erhalten.

Für den Fall sehr kleiner Eindringtiefen des Werkzeuges können somit TCP $T_0$ und PCP $T_{0\ intermediär}$ zusammenfallen, so dass bei der Verschiebung um die Länge $n_i$ bzw. ein Bruchteil der Länge von $n_i$ der PCP $T_{0\ intermediär}$ den TCP $T_0$ erreicht jedoch nicht überschreitet (nicht dargestellt). Für den Fall unterschiedlicher Längen der Vektoren $n_i$ entspricht die Länge der Verschiebung des PCP $T_{0\ intermediär}$ gegenüber dem PCP $T_{-1}$ der Länge des kürzesten aller Vektoren $n_i$ des Werkzeugs.

Der Proxy zum Zeitpunkt $T_0$ lässt sich nun durch Anwendung des in Fig. 2 beschriebenen Verfahrens an der Position PCP $T_{0\ intermediär}$ berechnen, d.h. im Ergebnis wird der Rückstellvektor s für den PCP $T_{0 \, intermediär}$ berechnet und der PCP $T_{0 \, intermediär}$ um den Rückstellvektor s verschoben und erreicht somit die Position PCP $T_0$ des Proxys zum Zeitpunkt $T_0$ (6).

Proportional zu der Entfernung PCP $T_0$ und TCP $T_0$ übt das Kraftrückkopplungsgerät eine Rückstellkraft in Richtung des PCP $T_0$ aus. Die resultierende Kraft aus der vom Benutzer auf das Werkzeug ausgeübten Kraft und der Rückstellkraft, bewirkt ein Entlanggleiten des Proxys an der Oberfläche. Bildlich dargestellt als Werkzeug wird der jeweilige Proxy $T_0$ und nicht der TCP $T_0$.

In Fig. 4 ist das aus dem Stand der Technik bekannte Verfahren dargestellt (Petersik et al.). Hier kann bei starker Werkzeug-Objekt Durchdringung für einen oder mehrere Suchvektoren n keine Oberfläche mehr gefunden werden. Die Strecke zwischen Proxy $T_{-1}$ (5) und TCP $T_0$ wird nach diesem Verfahren halbiert und an dieser Position (7) ein neuer Berechnungsversuch unternommen. Dies kann beliebig oft bis zu einer festzulegenden Iterationstiefe wiederholt werden (8). Wenn schließlich eine neue Position (6) berechnet werden kann, wird der Proxy an diese Position (6) gesetzt, ansonsten verbleibt er an der alten Position (5). Verursacht durch die notwenigen Berechnungsversuche und Iterationen ist der Rechenaufwand hoch und das Durchtunneln von Objekten kann nicht verhindert werden.

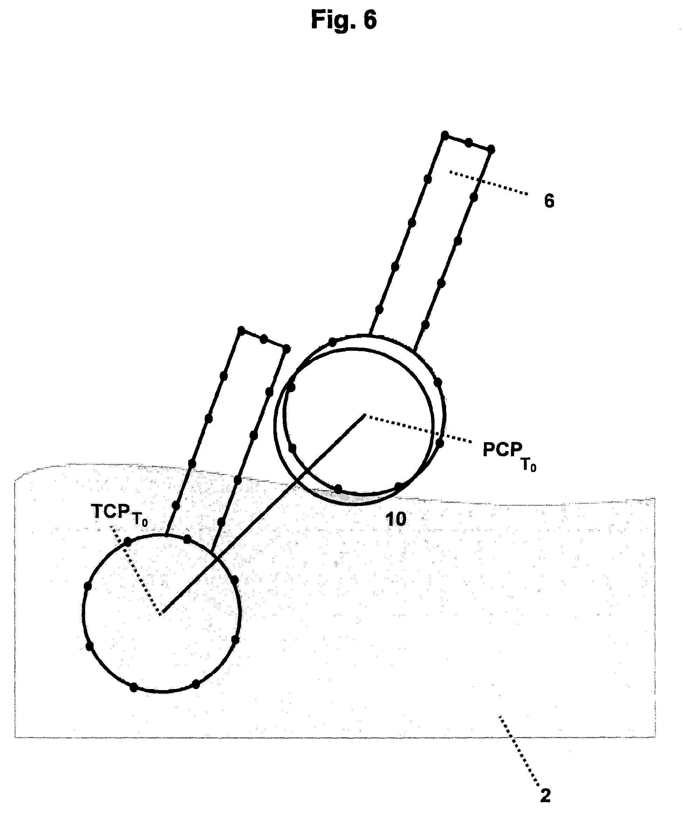

In Fig. 6 ist die haptische Simulation eines Materialabtrags gezeigt. Ein Materialabtragsproxy (10) ist eine weitere Kopie des Werkzeuges und wird durch seinen MCP (Materialabtragsproxy Center Point) lokalisiert. Der MCP ist als Linearkombination aus dem jeweils zu einem bestimmten Zeitpunkt aktuellem PCP $T_0$ und TCP $T_0$ berechnet. Die Linearkombination beinhaltet eine lineare Gewichtung der Positionen PCP und TCP (MCP = a x TCP + (1-a) x PCP) mit a von 0 bis 1). a ist das Maß für die Materialabtragsgeschwindigkeit und ist vorliegend etwa 0,05.

Der MCP und die Ausdehnung des Materialabtragsproxys (10) bewirken, dass das Objekt (2) in dem Ausmaß, in dem der Materialabtragsproxy (10) das Objekt schneidet als abgetragen dargestellt wird, so dass im Ergebnis die Formveränderung des zu bearbeitenden Objektes (2) festgeschrieben wird. Für die nächste Berechnung des PCP wird die neue Form berücksichtigt.

Weitere Details zum erfindungsgemäßen Verfahrens und zu dessen Durchführung sind im Weiteren aus der Veröffentlichung: Andreas Petersik: Realistische haptische Simulation materialabtragender chirurgischer Eingriffe. Fortschritte in der Robotik Bd. 11. Shaker Verlag, Aachen, 2007, ISBN 978-3-8322-6451-2 (zugleich Dissertation, Carl-Friedrich-Gauß-Fakultät, Technische Universität Braunschweig) ersichtlich, die hiermit ausdrücklich zum Offenbarungsgehalt dieser Anmeldung gemacht werden.

**Patentansprüche**

1. Verfahren zur Simulation der Haptik einer Interaktion eines von einem Benutzer geführten Gegenstandes, kurz Werkzeug genannt, mit einem virtuellen dreidimensionalen Objekt, wobei das Werkzeug mit Hilfe eines Kraftrückkopplungsgerätes geführt wird, umfassend die Schritte:

   a) Definieren einer Vielzahl von Punkten $P_i$ auf der Oberfläche des Werkzeuges (1) zumindest für den aktiven Bereich, wobei der aktive Bereich der Bereich des Werkzeuges ist, der mit dem Objekt während des Verfahrens in Kontakt bringbar ist, wobei von jedem der Punkte $P_i$ ein Vektor $n_i$ ausgeht, der senkrecht auf der Oberfläche (Flächennormale) steht und nach innen gerichtet ist, wobei der Endpunkt jeden Vektors $n_i$ innerhalb des Werkzeuges (1) angeordnet ist,
   b) Definieren einer Abbildung des Werkzeuges, im Folgenden Proxy genannt, die eine identische Duplizierung des Werkzeuges zumindest hinsichtlich der Punkte $P_i$ und der Vektoren $n_i$ ist,
   c) Definieren der Position des Werkzeuges durch den TCP (Tool Center Point) und der Position des Proxys durch den PCP (Proxy Center Point),
   d) Definieren einer Startposition PCP $T_{-1}$ für die kein Endpunkt der Vektoren $n_i$ Kontakt mit dem Objekt hat,
   e) in Kontakt bringen des Werkzeuges mit dem Objekt, umfassend auch das Eindringen in das Objekt, unter Ausbildung einer Position TCP $T_0$,
   f) Festlegen einer neuen Position des PCP $T_0$ aus der Position des Proxys zum Zeitpunkt $T_{-1}$ und des Werkzeugs zum Zeitpunkt $T_0$, durch Festlegen eines PCP $T_{0 \, intermediär}$ in einem Abstand von PCP $T_{-1}$ von maximal der Länge eines Vektors $n_i$, oder des Bruchteils einer Länge eines Vektors $n_i$, definiert als Verschiebungslänge 1, auf der Verbindungslinie PCP $T_{-1}$ zu TCP $T_0$,
   g) Bestimmen der Position PCP $T_0$ in Abhängigkeit von einer Fallunterscheidung:

      g.1) wenn zumindest ein Endpunkt eines Vektors $n_i$ des Proxys an der Position PCP $T_{0 \, intermediär}$ in das Objekt eintaucht, wird die Position PCP $T_0$ als Position PCP $T_{-1}$ definiert, andernfalls
      g.2) werden die Vektoren $n_i$ abgesucht, bis jeweils ein Schnittpunkt mit der Oberfläche des Objektes gefunden ist, wodurch sich Eindringtiefenvektoren $s_i$ zwischen Punkt $P_i$ und dem Schnittpunkt ergeben und die Eindringtiefenvektoren $s_i$ die Richtung der Vektors $n_i$ haben, aus den Eindringtiefenvektoren $s_i$ wird ein Rückstellvektor s berechnet, wobei die Richtung des Rückstellvektor s sich aus der Summe der Eindringtiefenvektoren $s_i$ ergibt und

PCP $T_{0 \text{ intermediär}}$ wird um den Rückstellvektor s verschoben und ergibt PCP $T_0$, und

    h) das Kraftrückkopplungsgerät übt eine Kraft in Richtung von TCP $T_0$ nach PCP $T_0$ aus.

**2.** Verfahren nach Anspruch 1, **dadurch gekennzeichnet, dass** für die Startposition PCP $T_{-1}$ und der TCP $T_{-1}$ zusammenfallen.

**3.** Verfahren nach zumindest einem der vorhergehenden Ansprüche, **dadurch gekennzeichnet, dass** die Schritte e) bis h) wiederholt ablaufen.

**4.** Verfahren nach zumindest einem der vorhergehenden Ansprüche, **dadurch gekennzeichnet, dass** Werkzeug und Objekt graphisch dargestellt werden und die Bewegung des Werkzeugs durch den Proxy wiedergegeben ist.

**5.** Verfahren nach zumindest einem der vorhergehenden Ansprüche, **dadurch gekennzeichnet, dass** die Länge des Rückstellvektors s durch das Projektionsverfahren, Vektoraddition oder Mittelwertbildung der Eindringtiefenvektoren $s_i$ berechnet wird, vorzugsweise durch das Projektionsverfahren.

**6.** Verfahren nach zumindest einem der vorhergehenden Ansprüche, **dadurch gekennzeichnet, dass** im Schritt g.2) die Vektoren $n_i$ vom jeweiligen Endpunkt ausgehend schrittweise bis zum Punkt Pi abgesucht werden, bis jeweils ein erster Schnittpunkt mit dem Objekt auf dem Vektor $n_i$ gefunden ist, um die Eindringtiefenvektoren $s_i$ zu definieren.

**7.** Verfahren nach zumindest einem der vorhergehenden Ansprüche, **dadurch gekennzeichnet, dass** die Verschiebungslänge 1 der Länge des kürzesten aller Vektoren $n_i$ entspricht.

**8.** Verfahren gemäß einem der vorhergehenden Ansprüche, **dadurch gekennzeichnet, dass** das Objekt durch eine mathematische Funktion, insbesondere durch eine implizite Funktion, oder vorzugsweise durch ein aus einer Vielzahl von Voxeln bestehendes Volumenmodell gegeben ist.

**9.** Verfahren gemäß zumindest einem der vorhergehenden Ansprüche, **dadurch gekennzeichnet, dass** das Kraftrückkopplungsgerät eine Kraft in Richtung von TCP $T_0$ nach PCP $T_0$ proportional zur Entfernung von TCP $T_0$ nach PCP $T_0$ ausübt.

**10.** Verfahren zur Simulation der Haptik einer Interaktion eines von einem Benutzer geführten Gegenstandes, kurz Werkzeug genannt, mit einem virtuellen dreidimensionalen Objekt, wobei das Werkzeug mit Hilfe eines Kraftrückkopplungsgerätes geführt wird und das Objekt einen Materialabtrag erfährt, umfassend die Schritte:

    A) Anwendung eines Verfahrens zur Simulation der Haptik unter Verwendung eines an der Oberfläche geführten Proxys für das Werkzeug,
    B) Bereitstellen eines Materialabtragsproxys als weiterer Kopie des Werkzeuges
    C) Definieren der Position des Materialabtragsproxys durch Linearkombination aus den jeweils zu einem Zeitpunkt gültigen Positionen des Proxys und des in das Objekt geführten Werkzeugs, und
    D) Abtragen des Objekts im Bereich der Überschneidung des Materialabtragsproxys (10) mit dem Objekt (2), um die Formveränderung des Objektes (2) festzuschreiben,
    E) Reaktion des über die Oberfläche geführten Proxys auf das durch den Materialabtragsprozess veränderte Objekt zur Simulation der Haptik.

**11.** Verfahren gemäß Anspruch 10, **dadurch gekennzeichnet, dass** Proxy und Materialabtragsproxy in zwei Prozessen, vorzugsweise asynchronen Prozessen, berechnet werden, wobei zur Erfassung des Haptik mindestens 500 Proxy-Positionen pro Sekunde, vorzugsweise mindestens 800 Proxy-Positionen pro Sekunde, und zur Erfassung des Materialabtrags pro Sekunde 5 bis 200, insbesondere 20 bis 100, Positionen des Materialabtragsproxys berechnet werden.

**12.** Verfahren gemäß Anspruch 10 oder 11, **dadurch gekennzeichnet, dass** die Linearkombination aus einer beliebigen Kombination der Wertepaare der Positionen von Proxy und Werkzeug zum jeweiligen Zeitpunkt $T_0$, oder $T_{-1}$ oder sogar bis $T_{-4}$ erfolgt, bevorzugt jeweils zum Zeitpunkt $T_0$ bzw. dem zeitlich dichtesten Punkt der beiden asynchronen Prozesse.

**13.** Verfahren gemäß zumindest einem der Ansprüche 10 bis 12, **dadurch gekennzeichnet, dass** die Simulation der Haptik und die Bestimmung des Proxys mit einem Verfahren nach einem der Ansprüche 1 bis 9 erfolgt.

**14.** Verfahren gemäß zumindest einem der Ansprüche 10 bis 13, **dadurch gekennzeichnet, dass** der den Materialabtragsproxy (10) lokalisierende Materialabtragsproxy Center Point (MCP) eine Linearkombination aus dem jeweils zu einem bestimmten Zeitpunkt aktuellen PCP $T_0$ und TCP $T_0$ ist unter Anwendung einer linearen Gewichtung der Positionen PCP und TCP gemäß der Formel

$$MCP = a \times TCP + (1-a) \times PCP$$

mit a von 0 bis 1, wobei a ein Maß für die Eigenschaften Materialhärte, Materialabtragsgeschwindigkeit und/oder Schärfe des Werkzeugs bzw. eine gemittelte oder gewichte Kombination dieser Größen ist und bevorzugt in Bezug auf die Materialhärte 0 für sehr hart und 1 für sehr weich, in Bezug auf die Materialabtragsgeschwindigkeit 0 für sehr niedrige Abtragsgeschwindigkeit und 1 für sehr hohe Abtragsgeschwindigkeit und in Bezug auf die Schärfe des Werkzeugs 0 für sehr geringe Schärfe und 1 für sehr große Schärfe steht.

15. Verfahren nach Anspruch 14, **dadurch gekennzeichnet, dass** unabhängig voneinander a eine gemittelte oder gewichte Kombination der Größen wie folgt ist:

    - die Härte des Materials wird von dem Härteattribut des Volumenelements bzw. der gemittelten Härteattribute der Volumenelemente, das/die mit dem PCP kontaktieren auf einer Skala von 0 bis 1 bestimmt,
    - die Materialabtragsgeschwindigkeit wird von der am Werkzeug eingestellten Abtragsgeschwindigkeit des Werkzeugs auf einer Skala von 0 bis 1 bestimmt und/oder
    - die Schärfe des Werkzeugs wird von einer für das ausgewählte Werkzeug festgelegten Größe zwischen 0 und 1 bestimmt.

**Fig. 1**

**Fig. 2**

# Fig. 3

# Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ZILLES, C. ; SALISBURY, J. K.** A constraint-based god object method for haptics display. *Proc. of IEEE/RSJ,* 1995
- **MCNEELY W. A. ; PUTERBAUGH K. D. ; TROY J. J.** Six degree-offreedom haptic rendering using voxel sampling. *Proc. of ACM SIGGRAPH,* 1999, 401-408

- **PETERSIK, A. ; PFLESSER, B. ; TIEDE, U. ; HÖHNE, K. H. ; LEUWER, R.** Haptic volume interaction with anatomic models at sub-voxel resolution. *10th Int. Symposium on Haptic Interfaces for Virtual Environment and Teleoperator Systems, Proc. Haptics,* 2002, 66-72
- Fortschritte. Shaker Verlag, 2007